# EUROPÄISCHE PATENTANMELDUNG

(11) **EP 1 878 358 A1**
(43) Veröffentlichungstag der Anmeldung: **16.01.2008**
(21) Anmeldenummer: 07013208.9
(22) Anmeldetag: 05.07.2007
(51) Int. Cl.: A47B 37/00, A47B 3/087

(54) **Klappbarer Multifunktionstisch**

(30) Priorität: 12.07.2006 DE 202006010862 U
(71) Anmelder: Schinko, Michael, 94345 Aholfing (DE)
(72) Erfinder: Schinko, Michael, 94345 Aholfing (DE)
(74) Vertreter: Jung Schirdewahn Grünberg Schneider

(57) **Zusammenfassung**

Die vorliegende Erfindung betrifft einen klappbaren Multifunktionstisch (1), umfassend
- eine Auflageplatte (2),
- mindestens ein ausklappbares Fußgestell (3),
- mindestens einen ausklappbaren Bügel (6) sowie
- mindestens zwei Räder (5).

## Beschreibung

Die vorliegende Erfindung betrifft einen klappbaren Multifunktionstisch.
In zahlreichen Situationen des täglichen Lebens wird man mit der Aufgabe konfrontiert, bestimmte Gegenstände transportieren und an einem bestimmten Ort aufstellen oder präsentieren zu müssen.

So bieten beispielsweise viele Menschen auf so genannten Flohmärkten ihre Waren zum Verkauf an, wobei die unterschiedlichsten Waren, wie beispielsweise Bücher, Geschirr aber auch Kleidung präsentiert werden sollen. Dabei muss die zu verkaufende Ware oft über weite Strecken vom Auto bis zum jeweiligen Standplatz gebracht werden. Daneben muss auch ein Tisch zum Aufstellen dieser Waren zum jeweiligen Standplatz gebracht werden.
Beim Darbieten bestimmter Waren, wie beispielsweise Kleidung, besteht häufig das Problem, dass eine Präsentation durch Ablegen auf dem Warentisch zu Unübersichtlichkeit und Unordnung führt. Deshalb muss oftmals auch ein Kleiderständer extra mit zum Standplatz gebracht werden, um die Ware übersichtlich anbieten zu können.

Der vorliegenden Erfindung liegt die Aufgabe zu Grunde, eine Vorrichtung zur Verfügung zu stellen, mit der Waren in einfacher Weise transportiert und anschließend übersichtlich präsentiert werden können.

Diese Aufgabe wird gelöst durch einen klappbaren Multifunktionstisch, umfassend
- eine Auflageplatte,
- mindestens ein ausklappbares Fußgestell,
- mindestens einen ausklappbaren Bügel sowie
- mindestens zwei Räder.

Durch die Tatsache, dass der erfindungsgemäße Multifunktionstisch zusammenklappbar ist, kann dieser nach dem Gebrauch in einfacher Weise transportiert und verstaut werden. Hierzu trägt unter anderem auch das ausklappbare Fußgestell des erfindungsgemäßen Multifunktionstisches bei.

Durch den mindestens einen ausklappbaren Bügel des erfindungsgemäßen Multifunktionstisches lassen sich bestimmte Gegenstände, wie beispielsweise Kleidungsstücke, einfach und in übersichtlicher Art und Weise präsentieren, indem diese, beispielsweise versehen mit Kleiderbügeln, an diesem ausklappbaren Bügel aufgehängt werden. Wie unten näher ausgeführt werden wird, lässt sich der ausklappbare Bügel im eingeklappten Zustand als Griff zum einfacheren Transportieren des erfindungsgemäßen Multifunktionstisches verwenden.

Zu einer wesentlichen Vereinfachung des Transportierens tragen nicht zuletzt die mindestens zwei Räder bei, die am Multifunktionstisch der Erfindung angebracht sind.

Bei einer besonders bevorzugten Ausführungsform des erfindungsgemäßen Multifunktionstisches weist dieser ein weiters ausklappbares Element, insbesondere ein ausklappbares Brett auf. Dieses weitere ausklappbare Element ist im aufgeklappten Zustand des erfindungsgemäßen Multifunktionstisches in der Regel eingeklappt. Zum Transportieren von Waren wird der Multifunktionstisch zunächst zusammengeklappt wobei dann das weitere ausklappbare Element ausgeklappt wird. Auf diesem ausgeklappten Element (insbesondere ausgeklappten Brett) können dann Waren abgestellt werden, so dass der gesamte zusammengeklappte Multifunktionstisch als Trolley oder Sackkarre fungieren kann (siehe auch Figurenbeschreibung).
Mit Vorteil ist das weitere ausklappbare Element in die Auflageplatte integriert. Auf diese Art und Weise lässt sich der erfindungsgemäße Multifunktionstisch im unbenutzten Zustand möglichst platzsparend verstauen.

Vorzugsweise ist die Auflageplatte mehrteilig, insbesondere 3-teilig, aufgebaut, wobei die Auflageplatte vorzugsweise zusammenklappbar ist. Auf diese Art und Weise lässt sich durch Aufklappen der Auflageplatte die Auflagefläche zum Ablegen von Waren vergrößern, wobei der Tisch nach dem Gebrauch durch das Zusammenlegen der Auflageplatte auf handliche Maße zurückgeführt werden kann.

Bei einer bevorzugten Ausführungsform des erfindungsgemäßen Multifunktionstisches weist die Auflageplatte Schienen zur Aufnahme des ausklappbaren Bügels im eingeklappten Zustand auf. Dies bewirkt unter anderem den weiteren Vorteil, dass der ausklappbare Bügel im eingeklappten Zustand möglichst wenig Platz beansprucht und der gesamte Tisch auf handliche Maße zusammengelegt werden kann.

Bevorzugt ist der ausklappbare Bügel, vorzugsweise an verschiedenen Positionen in der Schiene, einrastbar. So kann der ausklappbare Bügel an einer Position einrastbar sein, in der er nicht mehr oder kaum aus der Auflageplatte herausragt. Diese Position ist beim Nichtgebrauch bzw. Verstauen des Multifunktionstisches bevorzugt, da diese Position den wenigsten Platz einnimmt. Der ausklappbare Bügel kann aber auch so einrasten, dass er etwas aus der Tragplatte hervorragt. In dieser Position kann er als Griff zum Ziehen des Multifunktionstisches im zusammengeklappten Zustand dienen.

Vorzugsweise ist der ausklappbare Bügel im ausgeklappten Zustand in einem bestimmten Winkel, insbesondere in einem rechten Winkel, zur Tragplatte einrastbar. Dies bewirkt eine Stabilität des besagten Bügels, die beispielsweise beim Aufhängen von Kleidung von Nöten ist. Mit Vorteil ist der ausklappbare Bügel am äußersten Rand der Auflageplatte einrastbar. Dadurch ist der Bügel im Hinblick auf die, auf der Auflageplatte zu positionierenden Waren am wenigsten hinderlich.

Ferner kann der erfindungsgemäße Multifunktionstisch eine Beleuchtungseinrichtung, z.B. eine an ihm befestigte Lampe, aufweisen.

Der erfindungsgemäße klappbare Multifunktionstisch kann beispielsweise ein umgebauter Tapeziertisch sein.

Neben dem oben genannten Einsatz als "Flohmarkttisch" eignet sich der erfindungsgemäße Multifunktionstisch auch als ideales Hilfsmittel für Handwerker, z.B. Maler. Auch diese können den Multifunktionstisch sowohl als Transportmittel für ihre benötigten Utensilien (z.B. Eimer, Werkzeuge, Schachteln etc.) als auch als Arbeitstisch verwenden.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Figur 1:: eine perspektivische Darstellung eines erfindungsgemäßen Multifunktionstisches im ausgeklappten Zustand;
- Figur 2:: eine perspektivische Darstellung des erfindungsgemäßen Multifunktionstisches nach Figur 1 im zusammengeklappten Zustand;
- Figur 3:: eine perspektivische Darstellung des erfindungsgemäßen Multifunktionstisches nach Figur 1 im zusammengeklappten Zustand, wobei der Tisch zum transportieren von Waren hergerichtet ist.

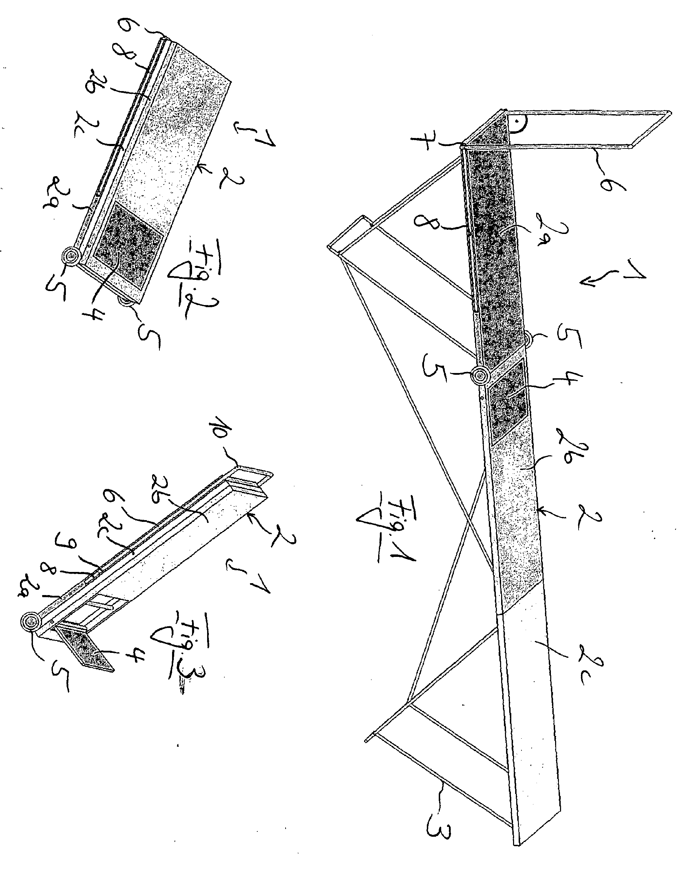

Figur 1 zeigt eine perspektivische Darstellung eines erfindungsgemäßen Multifunktionstisches 1. Der Multifunktionstisch 1 weist eine Auflageplatte 2 auf, welche wiederum aus drei Teilen 2a, 2b und 2c aufgebaut ist. Die drei Teile 2a, 2b und 2c sind gelenkig miteinander verbunden und können übereinander geklappt werden.
Der Multifunktionstisch 1 weist ferner ein Fußgestell 3 zum Aufstellen des Multifunktionstisches 1 auf.

Im Teil 2b der Auflageplatte 2 ist ein ausklappbares Brett 4 integriert. Dieses ausklappbare Brett dient im zusammengeklappten Zustand des Multifunktionstisches 1 als Auflagefläche von zu transportierenden Waren (siehe auch Beschreibung zu Figur 3).

Zwischen dem Teil 2a und dem Teil 2b der Auflageplatte 2 sind zwei Räder 5 angeordnet. Diese Räder dienen zum erleichterten Transportieren des Tisches 1 im zusammengeklappten Zustand (siehe auch Beschreibung zu Figur 3).

Der Multifunktionstisch 1 weist ferner einen Bügel 6 auf, welcher am äußersten Rand des Teiles 2a der Auflageplatte 2 angeordnet ist. Dieser Bügel schließt mit der Auflageplatte 2 in etwa einen Rechtenwinkel ein. Der Bügel 6 ist im gezeigten, ausgeklappten Zustand in einer Rastaufnahme 7 des Teils 2a der Auflageplatte 2 eingerastet. In diesem Zustand können Gegenstände, wie beispielsweise Kleidungsstücke, am Bügel 6 aufgehängt werden.

An den Längsseiten des Teils 2a der Auflageplatte 2 ist jeweils eine Schiene 8 angebracht. Diese Schiene 8 dient zur Aufnahme des Bügels 6 im eingeklappten Zustand.

Figur 2 zeigt eine perspektivische Darstellung des erfindungsgemäßen Multifunktionstisches 1 im zusammengeklappten Zustand. Hierbei sind die Teile 2a, 2b und 2c der Auflageplatte 2 übereinander geklappt, so dass sie den kleinstmöglichen Raum beanspruchen. Der Bügel 6 ist komplett in die Schiene 8 des Teils 2a der Auflageplatte 2 eingeschoben und ragt nur noch unwesentlich über das Teil 2a hinaus. In dieser Position ist der Bügel 6 in einer Rastaufnahme im unteren Ende der Schiene 8 eingerastet.
In diesem so zusammengeklappten Zustand nimmt der Tisch den kleinstmöglichen Platz in Anspruch und kann somit optimal verstaut werden.

Figur 3 zeigt eine weitere perspektivische Darstellung des erfindungsgemäßen Multifunktionstisches 1 im zusammengeklappten Zustand, wobei der Tisch 1 im gezeigten Zustand als Transportmittel für Waren verwendet werden kann.

Bei dem in Figur 3 gezeigten Zustand ist der Bügel 6 nicht bis zum Anschlag in die Schiene 8 eingeschoben. Vielmehr ist der Bügel 6 in einer weiteren Rastaufnahme 9 in der Schiene 8 eingerastet und ragt ein Stück über das Teil 2a der Auflageplatte 2 hinaus. Der über das Teil 2a der Auflageplatte 2 hinausragender Abschnitt 10 des Bügels 6 kann als Griff zum Tragen oder Ziehen des Tisches 1 verwendet werden.

Das ausklappbare Brett 4 ist in der vorliegenden Abbildung ausgeklappt und kann als Auflage für zu transportierende Waren verwendet werden. Durch das Zusammenspiel des oberen Bügelabschnitts 10, den Rädern 5 und dem ausgeklappten Brett 4 kann der Multifunktionstisch 1 in diesem, in Figur 3 gezeigten zusammengeklappten Zustand, als Trolley oder Sackkarre verwendet werden.

Mit dem Multifunktionstisch 1 können, wie gezeigt, mehrere "Fliegen mit einer Klappe geschlagen" werden. Zum Einen kann der Tisch (1) derart zusammengelegt werden, dass er den kleinstmöglichen Platz einnimmt (was beim Verstauen des Tisches von Wichtigkeit ist). Im zusammengeklappten Zustand kann der Tisch mit wenigen Handgriffen so verändert werden, dass er als Transportmittel (z.B. Trolley) zum Transportieren von Waren verwendet werden kann. Hierzu muss lediglich der Bügel 6 in die Rastaufnahme 9 einrasten und das Brett 4 ausgeklappt werden. Zum Präsentieren von Waren ist der Tisch 1 mit wenigen Handgriffen ausklappbar, wobei Waren nicht nur auf der Auflageplatte 2 abgelegt werden können, sondern auch auf den Bügel 6 gehängt werden können.

## Patentansprüche

1. Klappbarer Multifunktionstisch (1), umfassend
- eine Auflageplatte (2),
- mindestens ein ausklappbares Fußgestell (3),
- mindestens einen ausklappbaren Bügel (6) sowie
- mindestens zwei Räder (5).

2. Klappbarer Multifunktionstisch (1), **dadurch gekennzeichnet, dass** er mindestens ein weiteres ausklappbares Element (4), insbesondere ein ausklappbares Brett, aufweist.

3. Klappbarer Multifunktionstisch (1) nach Anspruch 2, **dadurch gekennzeichnet, dass** das ausklappbare Element (4) in die Auflageplatte (2) integriert ist.

4. Klappbarer Multifunktionstisch nach einem der vorhergehenden Ansprüche, **dadurch gekennzeichnet, dass** die Auflageplatte (1) mehrteilig, insbesondere 3-teilig, aufgebaut ist, wobei die Auflageplatte (1) vorzugsweise zusammenklappbar ist.

5. Klappbarer Multifunktionstisch (1) nach einem der vorhergehenden Ansprüche, **dadurch gekennzeichnet, dass** die Auflageplatte (2) eine Schiene (7) zur Aufnahme des ausklappbaren Bügels (6) im eingeklappten Zustand aufweist.

6. Klappbarer Multifunktionstisch (1) nach Anspruch 5, **dadurch gekennzeichnet, dass** der ausklappbare Bügel (6), vorzugsweise an verschiedenen Positionen, in der Schiene (7) einrastbar ist.

7. Klappbarer Multifunktionstisch (1) nach einem der vorhergehenden Ansprüche, **dadurch gekennzeichnet, dass** der ausklappbare Bügel (6) im ausgeklappten Zustand in einem bestimmten Winkel, insbesondere im rechten Winkel, zur Auflageplatte (2) einrastbar ist.

8. Klappbarer Multifunktionstisch (1) nach Anspruch 7, **dadurch gekennzeichnet, dass** der ausklappbare Bügel (6) im ausgeklappten Zustand am äußersten Rand der Auflageplatte (2) einrastbar ist.

9. Klappbarer Multifunktionstisch (1) nach einem der vorhergehenden Ansprüchen, **dadurch gekennzeichnet, dass** er ein umgebauter Tapeziertisch ist.

10. Klappbarer Multifunktionstisch (1) nach einem der vorhergehenden Ansprüchen, **dadurch gekennzeichnet, dass** er eine Beleuchtungseinrichtung aufweist.
